(19)

Europäisches
Patentamt
European
Patent Office
Office européen
des brevets

(11)  **EP 4 539 145 A1**

(12)  **EUROPEAN PATENT APPLICATION**
published in accordance with Art. 153(4) EPC

(43) Date of publication:
**16.04.2025 Bulletin 2025/16**

(21) Application number: **23907911.4**

(22) Date of filing: **15.12.2023**

(51) International Patent Classification (IPC):
$H01M\ 4/134^{(2010.01)}$   $H01M\ 4/38^{(2006.01)}$
$H01M\ 4/48^{(2010.01)}$   $H01M\ 4/525^{(2010.01)}$
$H01M\ 4/505^{(2010.01)}$   $H01M\ 10/052^{(2010.01)}$
$H01M\ 4/04^{(2006.01)}$   $H01M\ 4/02^{(2006.01)}$
$H01M\ 10/42^{(2006.01)}$

(52) Cooperative Patent Classification (CPC):
**H01M 4/02; H01M 4/04; H01M 4/134; H01M 4/38;
H01M 4/48; H01M 4/505; H01M 4/525;
H01M 10/052; H01M 10/42; Y02E 60/10**

(86) International application number:
**PCT/KR2023/095116**

(87) International publication number:
**WO 2024/136628 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022  KR 20220183766**

(71) Applicant: **LG Energy Solution, Ltd.
Seoul 07335 (KR)**

(72) Inventors:
• **PARK, Su Jin
Daejeon 34122 (KR)**
• **KWON, Yohan
Daejeon 34122 (KR)**
• **LEE, Jaewook
Daejeon 34122 (KR)**
• **JEON, Seoyoung
Daejeon 34122 (KR)**
• **JUN, Chan Soo
Daejeon 34122 (KR)**

(74) Representative: **Hoffmann Eitle
Patent- und Rechtsanwälte PartmbB
Arabellastraße 30
81925 München (DE)**

(54)  **LITHIUM SECONDARY BATTERY**

(57)  The present application relates to a lithium secondary battery, comprising a silicon-based negative electrode; a positive electrode; a separator; and an electrolyte, wherein the positive electrode or silicon-based negative electrode is a pre-lithiated electrode, wherein a silicon discharge capacity use range of the silicon-based negative electrode is 35% or less of a total negative electrode discharge capacity, and wherein an upper end of the silicon discharge capacity of the silicon-based negative electrode is 57% or less and a lower end thereof is 13% or more.

[Figure 1]

EP 4 539 145 A1

**Description**

[Technical Field]

This application claims priority to and the benefit of Korean Patent Application No. 10-2022-0183766 filed in the Korean Intellectual Property Office on December 23, 2022, the entire contents of which are incorporated herein by reference.

The present application relates to a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions coming from the positive electrode. As a negative electrode material, carbon-based materials such as graphite are excellent in stability and reversibility, but have a limitation in terms of capacity. Therefore, in fields for the purpose of high capacity, attempts to use Si-based materials with high theoretical capacity as the negative electrode material are increasing.

That is, a lithium secondary battery is usually manufactured by using a lithium-intercalated compound, such as $LiCoO_2$ or $LiMn_2O_4$ for the positive electrode, and a non-lithium intercalated material, such as a carbon-based or Si-based material for the negative electrode. During charging, the lithium ions intercalated to the positive electrode move to the negative electrode through the electrolyte solution. During discharging, the lithium ions move back to the positive electrode from the negative electrode. During charging, lithium moving from the positive electrode to the negative electrode reacts with the electrolyte solution to form a kind of passivation film, that is, a solid electrolyte interface (SEI), on a surface of the negative electrode. The SEI inhibits transport of electrons required for the reaction of the negative electrode with the electrolyte solution to prevent decomposition of the electrolyte, thereby stabilizing a structure of the negative electrode. On the other hand, formation of SEI is irreversible to cause consumption of lithium ions. That is, the lithium consumed due to the formation of SEI does not return to the positive electrode during the subsequent discharging process, resulting in a reduction in the capacity of the battery.

On the other hand, as an effort to improve the performance of the lithium secondary battery, it is needed to develop a technology for accelerating a charging rate. In order to rapidly charge a lithium secondary battery, a movement rate of lithium ions must be fast during the intercalation process of lithium ions into the negative electrode. Therefore, a battery design is being made to reduce a diffusion distance of lithium by forming a negative electrode active material layer to have a thickness at a level of a thin film, and to achieve high output by reducing internal resistance by forming a carbon-coated layer on a surface of the negative electrode active material layer to increase conductivity.

However, it is difficult to implement a high capacity with a negative electrode having such a thin film negative electrode active material layer. In addition, it is difficult to implement rapid charging in a negative electrode having a high capacity. In addition, when using a silicon-based negative electrode, a content of Si in the negative electrode is increased for increasing the energy density, and accordingly, the volume expands rapidly during the charging process to disconnect a conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that degradation in surface is accelerated, and therefore, the performance needs to be improved in terms of battery cycle.

Therefore, in order to solve the problem that occurs when a silicon-based compound with excellent rapid charging performance is used alone as a negative electrode active material, a variety of methods are discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path.

However, since the above methods may make the performance of the battery rather deteriorate, there is a limitation in application, so that there is still a limitation in commercialization of manufacturing a negative electrode battery having a high content of a silicon-based compound with excellent rapid charging performance. As the ratio of the silicon-based active material included in the silicon-based active material layer increases, pre-lithiation is concentrated on the surface of the negative electrode, so that the silicon-based active material on the surface side is rather damaged, and as non-uniform pre-lithiation occurs, a problem with the improvement of life characteristics occurs.

Therefore, there is a need for research on a lithium secondary battery with improved cycle performance while using a negative electrode including a silicon-based active material for high capacity.

Prior Art Document

(Patent Literature 1) Japanese Patent Application Publication No. 2009-080971

[Detailed Description of the Invention]

[Technical Problem]

As a result of research on the above-described problems, it was confirmed through research that when using a silicon-based negative electrode (particularly a pure Si negative electrode) as a negative electrode in order to secure capacity characteristics, a use region of the silicon-based negative electrode can be limited by adjusting an NP ratio and introducing a pre-lithiation process, and accordingly, life characteristics can be secured.

Accordingly, the present application relates to a lithium secondary battery including a silicon-based negative electrode.

[Technical Solution]

An exemplary embodiment of the present specification provides a lithium secondary battery including a silicon-based negative electrode; a positive electrode; a separator; and an electrolyte, wherein the positive electrode or silicon-based negative electrode is a pre-lithiated electrode, wherein a silicon discharge capacity use range of the silicon-based negative electrode is 35% or less of a total negative electrode discharge capacity, and wherein an upper end of the silicon discharge capacity of the silicon-based negative electrode is 57% or less and a lower end thereof is 13% or more.

[Advantageous Effects]

The main feature of the lithium secondary battery according to the present application is that the pre-lithiation process is applied to the silicon-based negative electrode or positive electrode, and when using the silicon-based negative electrode, and the total discharge capacity use range is limited, and specifically, the upper and lower ends of the discharge capacity are controlled.

Accordingly, it is possible to produce a battery that can achieve high capacity and high energy density, which are the advantages of using a silicon-based negative electrode, and at the same time to solve the existing problem of deterioration in life performance due to volume expansion during repeating cycles.

That is, the main feature of the lithium secondary battery according to the present application is that the life performance of the lithium secondary battery is secured by limiting the use region of silicon included in the negative electrode.

[Brief Description of Drawings]

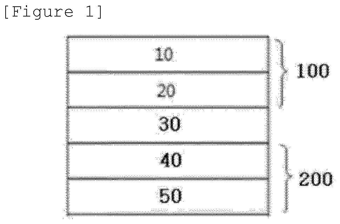

FIG. 1 shows a lithium secondary battery according to the present application.

<Explanation of Reference Numerals and Symbols>

10:     negative electrode current collector layer
20:     negative electrode active material layer
30:     separator
40:     positive electrode active material layer

50:     positive electrode current collector layer
100:    negative electrode
200:    positive electrode

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as **'a** homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including a silicon-based negative electrode; a positive electrode; a separator; and an electrolyte, wherein the positive electrode or silicon-based negative electrode is a pre-lithiated electrode, wherein a silicon discharge capacity use range of the silicon-based negative electrode is 35% or less of a total negative electrode discharge capacity, and wherein an upper end of the silicon discharge capacity of the silicon-based negative electrode is 57% or less and a lower end thereof is 13% or more.

The present application can produce a battery that can achieve high capacity and high energy density, which are the advantages of using a silicon-based negative electrode, and at the same time solves the existing problem of deterioration in life performance due to volume expansion during repeating cycles. That is, the main feature of the lithium secondary battery according to the present application is that the life performance of the lithium secondary battery is secured by limiting the use region of silicon included in the negative electrode.

FIG. 1 shows a stacked structure of a lithium secondary battery according to an exemplary embodiment of the present application. Specifically, a negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and the negative electrode 100 and the positive electrode 200 for a lithium secondary battery are formed in a stack structure with a separator 30 interposed therebetween.

In an exemplary embodiment of the present application, there is provided the lithium secondary battery in which a silicon discharge capacity use range of the silicon-based negative electrode is 35% or less of a total negative electrode discharge capacity, and in which an upper end of the silicon discharge capacity of the silicon-based negative electrode is 57% or less and a lower end thereof is 13% or more.

In an exemplary embodiment of the present application, there is provided the lithium secondary battery in which an NP ratio of the lithium secondary battery is 170% or greater and 280% or less.

In an exemplary embodiment of the present application, the NP ratio may satisfy the following Equation A.

N/P ratio = discharge capacity per unit area of negative electrode/discharge capacity per unit area of positive electrode. [Equation A]

In the present invention, the "discharge capacity per unit area" refers to a discharge capacity per unit area in a first cycle of the negative electrode or positive electrode.

The discharge capacity per unit area of the negative electrode can be obtained by the following method. Specifically, a half-cell is manufactured with a negative electrode sample including a negative electrode active material and a counter electrode (for example, a lithium metal electrode) facing the negative electrode sample. A discharge capacity measured by charging and discharging the half-cell is divided by a weight of the negative electrode active material to obtain a "discharge capacity of the negative electrode sample per unit weight of the negative electrode active material." A secondary battery is manufactured with a negative electrode including the same negative electrode active material as the negative electrode active material used in the half-cell and a positive electrode including the same positive electrode active material. The "discharge capacity of the negative electrode sample per unit weight of the negative electrode active material" is multiplied by a weight of the negative electrode active material included in the secondary battery, which is then divided by an area of the negative electrode included in the secondary battery to obtain the discharge capacity per unit area of the negative electrode.

The discharge capacity per unit area of the positive electrode can be obtained by the following method. Specifically, a half-cell is manufactured with a positive electrode sample including a positive electrode active material and a counter electrode (for example, a lithium metal electrode) facing the positive electrode sample. A discharge capacity measured by charging and discharging the half-cell is divided by a weight of the positive electrode active material to obtain a "discharge capacity of the positive electrode sample per unit weight of the positive electrode active material." A secondary battery is manufactured with a positive electrode including the same positive electrode active material as the positive electrode active material used in the half-cell and a negative electrode including the same negative electrode active material. The "discharge capacity of the positive electrode sample per unit weight of the positive electrode active material" is multiplied by a weight of the positive electrode active material included in the secondary battery, which is then divided by an area of the positive electrode included in the secondary battery to obtain the discharge capacity per unit area of the positive electrode.

The lithium secondary battery according to the present application has such a feature that a USOC of the negative electrode is limited by introducing a pre-lithiation process for the positive electrode or negative electrode and adjusting the NP ratio and applied.

In the present application, the upper and lower ends of the discharge capacity refer to upper and lower end values, calculated as a % value based on USOC, of discharge-based active Li in a total loading amount of the negative electrode, and may be values calculated from the loading amount and initial efficiency of the positive electrode and the initial efficiency of the negative electrode.

In an exemplary embodiment of the present application, there is provided the lithium secondary battery in which the upper end of the silicon discharge capacity of the silicon-based negative electrode is 45% or more and 57% or less and the lower end of the silicon discharge capacity of the silicon-based negative electrode is 13% or more and 28% or less.

In another exemplary embodiment, the upper end of the silicon discharge capacity of the silicon-based negative electrode may be 45% or more and 57% or less, preferably 46% or more and 53% or less, and more preferably 48% or more and 52% or less.

In another exemplary embodiment, the lower end of the silicon discharge capacity of the silicon-based negative electrode may satisfy 13% or more and 28% or less, preferably 14% or more and 25% or less, and more preferably 16% or more and 24.5% or less.

In an exemplary embodiment of the present application, there is provided the lithium secondary battery in which a difference between the upper and lower ends of the silicon discharge capacity is less 35%.

That is, the difference between the upper and lower ends of the silicon discharge capacity may be expressed as $\Delta Si$, which may refer to a capacity section used in the silicon-based negative electrode.

In another exemplary embodiment, the difference between the upper and lower ends of the silicon discharge capacity may be less than 35%, preferably 34.8% or less, and more preferably 34.5% or less, and may satisfy 20% or greater, and preferably 25% or greater.

That is, the use range of the negative electrode can be adjusted according to the N/P ratio and pre-lithiation as described above, and accordingly, the characteristics of the silicon-based negative electrode can be maintained as is, while also ensuring life characteristics.

In an exemplary embodiment of the present application, the silicon-based negative electrode or the positive electrode may be a pre-lithiated electrode. Pre-lithiation means supplementing an electrode in advance with lithium, and all methods used in the art, such as a transfer process, an electrochemical process, and an SLMP process, can be applied.

Below, the positive electrode, negative electrode, electrolyte, and separator included in the lithium secondary battery will be described, respectively.

According to the present application, the silicon-based negative electrode may include a negative electrode current collector layer, and a negative electrode active material layer including a negative electrode active material layer composition and being provided on one surface or both surfaces of the negative electrode current collector layer.

The negative electrode current collector layer generally has a thickness of 1 μm to 100 μm. Such a negative electrode current collector is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

In an exemplary embodiment of the present application, the negative electrode active material layer may include a negative electrode active material layer composition, and the negative electrode active material layer composition may include a silicon-based active material.

In an exemplary embodiment of the present application, the negative electrode active material layer may include a negative electrode active material layer composition, and the negative electrode active material layer composition may include one or more selected from the group consisting of a silicon-based active material, a negative electrode conductive material, and a negative electrode binder.

In an exemplary embodiment of the present application, the negative electrode active material layer may include a negative electrode active material layer composition, and the negative electrode active material layer composition may include a silicon-based active material; a negative electrode conductive material; and a negative electrode binder.

In an exemplary embodiment of the present application, the silicon-based active material may include one or more selected from the group consisting of $SiO_x$ (x=0), $SiO_x$ (0<x<2), SiC, and a Si alloy.

In an exemplary embodiment of the present application, the silicon-based active material may include one or more selected from the group consisting of $SiO_x$ (x=0), $SiO_x$ (0<x<2), and a metal impurity, and may include 70 parts by weight or more of $SiO_x$ (x=0) based on 100 parts by weight of the silicon-based active material.

In another exemplary embodiment, $SiO_x$ (x=0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, based on a total of 100 parts by weight of the silicon-based active material as described above, pure Si particles ($SiO_x$ (x=0)) not bonded to other particles or elements are included within the above range.

Note that an average particle diameter (D50) of the silicon-based active material of the present invention may be 5 μm to 10 μm, specifically 5.5 μm to 8 μm, and more specifically 6 μm to 7 μm. If the average particle diameter is less than 5 μm, the specific surface area of the particle increases excessively, causing the viscosity of the negative electrode slurry to increase excessively. Accordingly, the particles constituting the negative electrode slurry are not smoothly dispersed. In addition, if the size of the silicon-based active material is excessively small, a contact area between the silicon particles and the conductive material is reduced due to the composite consisting of the conductive material and the binder in the negative electrode slurry, so that a disconnection possibility of the conductive network increases, thereby lowering the capacity retention rate. On the other hand, if the average particle diameter is greater than 10 μm, excessively large silicon particles are present, so that the surface of the negative electrode is not smooth, causing current density unevenness during charging and discharging. Additionally, if the silicon particles are excessively large, the phase stability of the negative electrode slurry becomes unstable, deteriorating processability. As a result, the capacity retention rate of the battery decreases.

In an exemplary embodiment of the present application, the silicon-based active material generally has a characteristic BET specific surface area. The BET specific surface area of the silicon-based active material is preferably 0.01 m²/g to 150.0 m²/g, more preferably 0.1 m²/g to 100.0 m²/g, particularly preferably 0.2 m²/g to 80.0 m²/g, and most preferably 0.2 m²/g to 18.0 m²/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the negative electrode active material may be included in an amount of 60 parts by weight or more based on 100 parts by weight of the negative electrode active material layer composition.

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application uses the specific negative electrode conductive material and negative electrode binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line.

$$[Equation\ 1]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, the negative electrode active material layer composition may include a negative electrode conductive material and a negative electrode binder. That is, the negative electrode conductive material plays a role in securing a conductive path, and the binder plays a role in holding the negative electrode conductive material during charging and discharging.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used for improving conductivity of the negative electrode, forms conductivity without causing a chemical change and has a circular or point shape. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2/g$ or greater and 70 $m^2/g$ or less, preferably 45 $m^2/g$ or greater and 65 $m^2/g$ or less, and more preferably 50 $m^2/g$ or greater and 60 $m^2/g$ or less.

In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 1.5 $\mu$m or less, D50 of 4.0 $\mu$m or greater and 5.0 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 m$^2$/g or greater.

In another exemplary embodiment, the planar conductive material may have a BET specific surface area of 1 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 250 m$^2$/g or less.

In another exemplary embodiment, the planar conductive material is a planar conductive material with a low specific surface area, and the BET specific surface area may satisfy a range of 1 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term "bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material and the linear conductive material may be carbon nanotubes.

In an exemplary embodiment of the present application, the carbon nanotubes may be SWCNT or/and MWCNT. When the linear conductive material is SWCNT, a length of the SWCNT may be 0.5 $\mu$m to 100 $\mu$m, and preferably 1 $\mu$m to 80 $\mu$m.

In an exemplary embodiment of the present application, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less based on 100 parts by weight of the negative electrode active material layer composition.

In an exemplary embodiment of the present application, the negative electrode conductive material may include a planar conductive material and a linear conductive material, and a ratio of the planar conductive material to the linear conductive material may satisfy 1:0.001 to 1:0.3.

In an exemplary embodiment of the present application, as the negative electrode conductive material includes the planar conductive material and the linear conductive material and the composition and ratio described above are satisfied, respectively, the life characteristics of an existing lithium secondary battery are not significantly affected, and the number of points where the battery can be charged and discharged increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the plate-like conductive material that is used as the negative electrode conductive material is a material having a plane or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 8 parts by weight or more based on 100 parts by weight of the negative electrode active material layer composition.

Compared to existing carbon-based negative electrodes, when a Si-based negative electrode is used, an aqueous binder is applied in parts by weight described above, allowing the use of a point-like conductive material with a low functional group content. In addition, the above characteristics allows the point-like conductive material to have hydrophobicity and the excellent bond strength between the conductive material/binder.

In an exemplary embodiment of the present application, the silicon-based negative electrode may be formed by coating a negative electrode slurry including the negative electrode active material layer composition on one surface or both surfaces of the negative electrode current collector layer.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can disperse the negative electrode composition described above, and specifically, water or NMP may be used.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has electrical conductivity and resistance within appropriate ranges.

In an exemplary embodiment of the present application, the positive electrode includes a positive electrode current collector layer and a positive electrode active material layer including a positive electrode active material layer composition and being provided on one surface or both surfaces of the positive electrode current collector layer.

In an exemplary embodiment of the present application, the positive electrode active material layer may include a positive electrode active material layer composition, and the positive electrode active material layer composition may include one or more selected from the group consisting of a positive electrode active material, a positive electrode conductive material, and a positive electrode binder.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 1 to 500 $\mu$m, and a surface of the positive electrode current collector layer may be formed with microscopic irregularities to enhance adhesive force with the positive electrode active material. For example, the positive electrode current collector may be used in various forms such as a film, a sheet, a foil, a net, a porous body, a foamed body, and a non-woven fabric body.

In an exemplary embodiment of the present application, there is provided the lithium secondary battery in which the positive electrode and negative electrode current collector layers each have a thickness of 1 $\mu$m or greater and 100 $\mu$m or less and the positive electrode and negative electrode active material layers each have a thickness of 20 $\mu$m or greater and 500 $\mu$m or less.

The positive electrode active material may be a positive electrode active material that is typically used. Specifically, the positive electrode active material may include one or more selected from the group consisting of $LiNi_xCo_yMn_zO_2$ (x+y+z=1) ; $LiNi_aCo_bMn_cAl_dO_2$ (a+b+c+d=1) ; $LiMn_2O_4$; $LiNi_{0.5}Mn_{1.5}O_2$; and $LiM_xFe_yPO_4$ (M: transition metal, x+y=1). In this case, the positive electrode active material is not limited thereto.

Specifically, for the positive electrode active material, NCM or NCMA that is commonly used may be used.

In general, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0{\le}c1{\le}0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01{\le}c2{\le}0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01{\le}c3{\le}0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 μm or greater.

For example, the average particle diameter (D50) of the single particles may be 1 μm or greater and 12 μm or less, 1 μm or greater and 8 μm or less, 1 μm or greater and 6 μm or less, greater than 1 μm and 12 μm or less, greater than 1 μm and 8 μm or less, or greater than 1 μm and 6 μm or less.

Even when the single particles are formed with a small average particle diameter (D50) of 1 μm or greater and 12 μm or less, the particle strength may be excellent. For example, the single particle may have a particle strength of 100 MPa to 300 MPa when roll-pressing with a force of 650 kgf/cm$^2$. Accordingly, even when the single particles are roll-pressed with a strong force of 650 kgf/cm$^2$, the phenomenon of an increase in micro-particle in an electrode due to particle breakage is alleviated, which improves the life characteristics of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present invention, the single particle may be a single particle consisting of one primary particle or a quasi-single particle form that is an agglomerate of 30 or less primary particles, and the secondary particle may be an agglomerate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an agglomerate of 30 or less primary particles, and the secondary particle may be an agglomerate form of hundreds of primary particles.

The above-described lithium composite transition metal compound may further include secondary particles. The secondary particle means a form formed by agglomeration of primary particles, and can be distinguished from the concept of one primary particle, and a single particle (including one single particle; and a quasi-single particle form, which is an agglomerate of 30 or less primary particles).

The secondary particle may have a particle diameter (D50) of 1 μm to 20 μm, 2 μm to 17 μm, and preferably 3 μm to 15 μm. The specific surface area (BET) of the secondary particles may be 0.05 m$^2$/g to 10 m$^2$/g, preferably 0.1 m$^2$/g to 1 m$^2$/g, and more preferably 0.3 m$^2$/g to 0.8 m$^2$/g.

In a further exemplary embodiment of the present application, the secondary particle is an agglomerate of primary particles, and the average particle diameter (D50) of the primary particles is 0.5 μm to 3 μm. Specifically, the secondary particle may be an agglomerate form of hundreds of primary particles, and the average particle diameter (D50) of the primary particles may be 0.6 μm to 2.8 μm, 0.8 μm to 2.5 μm, or 0.8 μm to 1.5 μm.

When the average particle diameter (D50) of the primary particles satisfies the above range, a single-particle positive electrode active material having excellent electrochemical properties can be formed. If the average particle diameter (D50) of the primary particles is too small, the number of agglomerates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, a phenomenon of an increase in micro-particles in an electrode due to particle breakage is alleviated, which can improve the life characteristics of the battery.

In an exemplary embodiment of the present application, the average particle diameter (D50) of the single particles is 1 μm to 18 μm smaller than the average particle diameter (D50) of the secondary particles.

For example, the average particle diameter (D50) of the single particles may be 1 μm to 16 μm smaller, 1.5 μm to 15 μm smaller, or 2 μm to 14 μm smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, a phenomenon of an increase in micro-particles in an electrode due to particle breakage is alleviated, which improves the life characteristics and energy density of the battery.

According to a further exemplary embodiment of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles are included within the above range, excellent battery characteristics may be exhibited in combination with the negative electrode material described above. In particular, when the single particles are included in an amount of 15 parts by weight or more, a phenomenon of an increase in micro-particles in an electrode due to particle breakage in a roll-pressing process after fabrication of an electrode can be alleviated, which can improve the life characteristics of the battery.

In the exemplary embodiment of the present application, the lithium composite transition metal compound may further include secondary particles, and the secondary particles may be included in an amount of 85 parts by weight or less based on 100 parts by weight of the positive electrode active material. The secondary particles may be included in an amount of 80 parts by weight or less, 75 parts by weight or less, or 70 parts by weight or less based on 100 parts by weight of the positive electrode active material. The secondary particles may be included in an amount of 0 part by weight or more based on 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an agglomerate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

In the present application, examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**(1) Preparation of Negative Electrode**

**<Preparation of Negative Electrode Active Material Layer>**

A negative electrode active material layer composition was prepared using Si (average particle diameter (D50): 5 μm) as a silicon-based active material, a first conductive material, a second conductive material, and polyacrylamide as a binder at a weight ratio of 80:9.6:0.4:10. A negative electrode slurry (solid concentration: 28 wt%) was prepared by adding the composition to distilled water as a solvent for formation of a negative electrode slurry.

The first conductive material was plate-like graphite (specific surface area: 17 m$^2$/g, average particle diameter (D50): 3.5 μm), and the second conductive material was carbon nanotubes.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 15 μm) serving as a negative electrode current collector with a loading amount of 3.00 mg/cm$^2$, which was then roll-pressed and dried in a vacuum oven at 130°C for 10 hours to form a negative electrode active material layer (thickness: 23 μm).

**(2) Preparation of Positive Electrode**

A positive electrode slurry (solid concentration: 78 wt%) was prepared by adding LiNi$_{0.6}$Co$_{0.2}$Mn$_{0.2}$O$_2$ (average particle diameter (D50): 15 μm) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 μm) serving as a positive electrode current collector with a loading amount of 537 mg/25 cm$^2$, which was then roll-pressed and dried in a vacuum oven at 130°C for 10 hours to form a positive electrode active material layer (thickness: 65 μm), whereby a positive electrode was prepared (thickness of positive electrode: 77 μm, porosity: 26%).

Lithium secondary batteries shown in Table 1 below were prepared by interposing a polyethylene separator between the positive electrode and the negative electrode and injecting the electrolyte.

[Table 1]

| | N/P Ratio | Upper end of negative electrode capacity (%) | Lower end of negative electrode capacity (%) | △Si (%) | Pre-lithiation applied electrode | Pre-lithiation Li metal thickness (μm) | USOC |
|---|---|---|---|---|---|---|---|
| Example 1 | 240 | 51 | 24 | 27 | positive electrode | 6 | 65 |
| Example 2 | 240 | 51 | 24 | 27 | negative electrode | 6 | 65 |
| Example 3 | 190 | 56.8 | 22.4 | 34.4 | positive electrode | 3 | 65 |
| Comparative Example 1 | below 180/ above 240 | Above 53 | Below 13 | 35 | X | - | 80 |
| Comparative Example 2 | 240 | 59.9 | 22 | 37.8 | positive electrode | 12 | 90 |
| Comparative Example 3 | 240 | 51 | 9.4 | 42 | positive electrode | 6 | 100 |

In Table 1 above, the method for preparing a pre-lithiated applied electrode was as follows.

**<Pre-lithiation Using Transfer Method>**

Lithium metal was deposited to have a thickness (pre-lithiation dosage) shown in Table 1 above on top of the PET coated with a release layer (release layer is coated on one surface of PET; I-One Film, thickness of 20 $\mu$m to 50 $\mu$m) using a PVD method to prepare a transfer laminate, and pre-lithiation was performed by transferring a lithium metal layer on top of the electrode shown in Table 1.

**Experimental Example 1: Evaluation of Life Performance**

For the lithium secondary batteries including the negative electrodes prepared in the Examples and Comparative Examples, the life and capacity retention rate were evaluated using an electrochemical charging and discharging device. The secondary batteries were subjected to a cycle test at 4.2-3.2V 1C/0.5C, and the number of cycles at which the capacity retention rate reached 80% was measured and are shown in Table 2 below.

capacity retention rate (%)={ (discharge capacity in --> the Nth cycle)/(discharge capacity in the first cycle)} $\times$ 100

**Experimental Example 2: Measurement and Evaluation of Resistance Increase Rate**

After the capacity retention rates were measured by charging/discharging the secondary batteries at 0.33 C/0.33 C (4.2-3.0V) every 50 cycles during the test in Experimental Example 1, the secondary batteries were discharged at 2.5C pulse in SOC50 to measure the resistance, and then resistance increase rates were compared and analyzed.
For the evaluation of the resistance increase rate measurement, data at 600 cycles was each calculated, and the results are shown in Table 2 below.

[Table 2]

|  | Example 1 | Example 2 | Example 3 | Comparative Example 1 | Comparative Example 2 | Comparative Example 3 |
|---|---|---|---|---|---|---|
| Experimental Example 1 (number of times) | 850 | 810 | 750 | 400 | 690 | 610 |
| Experimental Example 2 (%) | -2 | 3 | 7 | 67 | 32 | 43 |

As can be seen from Tables 1 and 2 above, it could be confirmed that in the case of the lithium secondary batteries according to the examples, when using the silicon-based negative electrode while proceeding with a certain amount of pre-lithiation on the positive electrode or negative electrode, the total discharge capacity use range was limited, and specifically, the upper and lower ends of the discharge capacity were controlled.
Accordingly, it could be confirmed that it is possible to produce a battery that can achieve high capacity and high energy density, which are the advantages of using a silicon-based negative electrode, and at the same time to solve the existing problems of deterioration in life performance due to volume expansion during repeating cycles and increase in resistance.

That is, the main feature of the lithium secondary battery according to the present application is that the life performance of the lithium secondary battery is secured by limiting the use region of silicon included in the negative electrode.

In the case of Comparative Example 1 in which pre-lithiation was not applied to the positive electrode or negative electrode, the NP ratio range was also low, and both the upper and lower ends were used deeply, so it could be confirmed that the deterioration in life performance of lithium due to charging and discharging worsened and the resistance increase rate was high.

In the case of Comparative Example 2 and Comparative Example 3, pre-lithiation was carried out, but the pre-lithiation was carried out to a degree that did not satisfy the capacities of the upper and lower ends of the present invention. Specifically, Comparative Example 2 corresponds to a case where the upper end range of the negative electrode capacity exceeds the range according to the present application, and Comparative Example 3 corresponds to a case where the lower end range of the negative electrode capacity falls below the range according to the present application. In these cases, it could be confirmed that the performance did not deteriorate as much as Comparative Example 1, but the life performance decreased due to the volume expansion of the negative electrode compared to Examples 1 to 3.

**Claims**

1. A lithium secondary battery comprising:

   a silicon-based negative electrode;
   a positive electrode;
   a separator; and
   an electrolyte,
   wherein the positive electrode or silicon-based negative electrode is a pre-lithiated electrode,
   wherein a silicon discharge capacity use range of the silicon-based negative electrode is 35% or less of a total negative electrode discharge capacity, and
   wherein an upper end of the silicon discharge capacity of the silicon-based negative electrode is 57% or less and a lower end thereof is 13% or more.

2. The lithium secondary battery of claim 1, wherein an NP ratio of the lithium secondary battery is 170% or greater and 280% or less.

3. The lithium secondary battery of claim 1, wherein a difference between the upper and lower ends of the silicon discharge capacity is less than 35%.

4. The lithium secondary battery of claim 1, wherein the upper end of the silicon discharge capacity of the silicon-based negative electrode is 45% or more and 57% or less, and
   wherein the lower end of the silicon discharge capacity of the silicon-based negative electrode is 13% or more and 28% or less.

5. The lithium secondary battery of claim 1, wherein the silicon-based negative electrode comprises a negative electrode current collector layer and a negative electrode active material layer comprising a negative electrode active material layer composition and being provided on one surface or both surfaces of the negative electrode current collector layer,

   wherein the positive electrode comprises a positive electrode current collector layer and a positive electrode active material layer comprising a positive electrode active material layer composition and being provided on one surface or both surfaces of the positive electrode current collector layer,
   wherein the negative electrode active material layer composition comprises a silicon-based active material, a negative electrode conductive material, and a negative electrode binder, and
   wherein the silicon-based active material comprises one or more selected from the group consisting of $SiO_x$ (x=0), $SiO_x$ (0<x<2), and a metal impurity, and comprises 70 parts by weight or more of $SiO_x$ (x=0) based on 100 parts by weight of the silicon-based active material.

6. The lithium secondary battery of claim 5, wherein the silicon-based active material is included in an amount of 60 parts by weight or more based on 100 parts by weight of the negative electrode active material layer composition.

7. The lithium secondary battery of claim 5, wherein the positive electrode active material layer composition comprises a positive electrode active material, and

wherein the positive electrode active material comprises one or more selected from the group consisting of $LiNi_xCo_yMn_zO_2$ (x+y+z=1 ) ; $LiNi_aCo_bMn_cAl_dO_2$ (a+b+c+d=1) ; $LiMn_2O_4$; $LiNi_{0.5}Mn_{1.502}$; and $LiM_xFe_yPO_4$ (M: transition metal, x+y=1).

8. The lithium secondary battery of claim 5, wherein thicknesses of the positive electrode and negative electrode current collector layers are 1 $\mu$m or greater and 100 $\mu$m or less, respectively, and

wherein thicknesses of the positive electrode and negative electrode active material layers are 20 $\mu$m or greater and 500 $\mu$m or less, respectively.

[Figure 1]

## INTERNATIONAL SEARCH REPORT

| International application No. |
| --- |
| **PCT/KR2023/095116** |

| | |
| --- | --- |
| **A.** | **CLASSIFICATION OF SUBJECT MATTER** |

**H01M 4/134**(2010.01)i; **H01M 4/38**(2006.01)i; **H01M 4/48**(2010.01)i; **H01M 4/525**(2010.01)i; **H01M 4/505**(2010.01)i; **H01M 10/052**(2010.01)i; **H01M 4/04**(2006.01)i; **H01M 4/02**(2006.01)i; **H01M 10/42**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H01M 4/134(2010.01); C01B 32/05(2017.01); H01M 10/05(2010.01); H01M 10/052(2010.01); H01M 10/058(2010.01); H01M 10/42(2006.01); H01M 4/139(2010.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 실리콘계 음극(silicon-based anode), 방전 용량(discharge capacity), 전리튬화(prelithiation)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | KR 10-2022-0103469 A (LG ENERGY SOLUTION, LTD.) 22 July 2022 (2022-07-22)<br>See paragraphs [0019] and [0127]; and claim 1. | 1-8 |
| A | KR 10-2020-0095713 A (LG CHEM, LTD.) 11 August 2020 (2020-08-11)<br>See entire document. | 1-8 |
| A | JP 2017-076466 A (NIKON CORP.) 20 April 2017 (2017-04-20)<br>See entire document. | 1-8 |
| A | KR 10-2323295 B1 (NIST(ULSAN NATIONAL INSTITUTE OF SCIENCE AND TECHNOLOGY)) 08 November 2021 (2021-11-08)<br>See entire document. | 1-8 |
| A | JP 2015-095332 A (TOYOTA MOTOR CORP.) 18 May 2015 (2015-05-18)<br>See entire document. | 1-8 |

| | |
| --- | --- |
| ✓ Further documents are listed in the continuation of Box C. | ✓ See patent family annex. |

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 April 2024** | **09 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/095116** |

**C.    DOCUMENTS CONSIDERED TO BE RELEVANT**

| Category* | Citation of document, with indication, where appropriate, of the relevant passages | Relevant to claim No. |
| --- | --- | --- |
| A | SONG, B. F. et al. Evaluating the capacity ratio and prelithiation strategies for extending cyclability in porous silicon composite anodes and lithium iron phosphate cathodes for high capacity lithium-ion batteries. Journal of Energy Storage. 2020, vol. 28, thesis no. 101268, pp. 1-8. <br>        See entire document. | 1-8 |

Form PCT/ISA/210 (second sheet) (July 2022)

**INTERNATIONAL SEARCH REPORT**
**Information on patent family members**

International application No.

**PCT/KR2023/095116**

| Patent document cited in search report | | | Publication date (day/month/year) | Patent family member(s) | | | Publication date (day/month/year) |
|---|---|---|---|---|---|---|---|
| KR | 10-2022-0103469 | A | 22 July 2022 | CN | 116075950 | A | 05 May 2023 |
| | | | | EP | 4184652 | A1 | 24 May 2023 |
| | | | | JP | 2023-542364 | A | 06 October 2023 |
| | | | | US | 2023-0318056 | A1 | 05 October 2023 |
| | | | | WO | 2022-154309 | A1 | 21 July 2022 |
| KR | 10-2020-0095713 | A | 11 August 2020 | CN | 113272996 | A | 17 August 2021 |
| | | | | EP | 3863086 | A1 | 11 August 2021 |
| | | | | EP | 3863086 | A4 | 08 December 2021 |
| | | | | KR | 10-2542291 | B1 | 14 June 2023 |
| | | | | US | 2022-0006065 | A1 | 06 January 2022 |
| | | | | WO | 2020-159263 | A1 | 06 August 2020 |
| JP | 2017-076466 | A | 20 April 2017 | None | | | |
| KR | 10-2323295 | B1 | 08 November 2021 | KR | 10-2021-0097484 | A | 09 August 2021 |
| JP | 2015-095332 | A | 18 May 2015 | JP | 6094817 | B2 | 15 March 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183766
- JP 2009080971 A